# EUROPÄISCHE PATENTANMELDUNG

(11) **EP 4 400 294 A1**
(43) Veröffentlichungstag der Anmeldung: **17.07.2024**
(21) Anmeldenummer: 23219089.2
(22) Anmeldetag: 21.12.2023
(51) Int. Cl.: B29D 30/00, B29D 30/06, B25J 19/06

(54) **UNSTETIGFÖRDERER**

(30) Priorität: 12.01.2023 DE 102023200238
(71) Anmelder: Continental Reifen Deutschland GmbH, 30175 Hannover (DE)
(72) Erfinder: Ansari, Ashim Gulam Mohammed, 30175 Hannover (DE); Bolz, Gerrit, 30175 Hannover (DE); Krone, Ralf, 30175 Hannover (DE)
(74) Vertreter: Continental Corporation

(57) **Zusammenfassung**

Die Erfindung betrifft einen Unstetigförderer (1) zum Befördern von Luftreifen (5) von einer Lagereinheit (6) zu einer Position im Bereich einer Vulkanisationspresse (7), mit einem Roboterarm (2) und einem an dem Roboterarm (2) gelagerten Greifer (3), wobei der Unstetigförderer (1) dazu eingerichtet ist zeitgleich mit Personen im Arbeitsbereich der Personen autonom zu verfahren und bei Annäherung an oder Kontakt mit den Personen seine Fördergeschwindigkeit anzupassen. Die Erfindung betrifft ferner ein Verfahren zum Befördern von Luftreifen mit einem Untstetigförderer (1).

## Beschreibung

Die Erfindung betrifft einen Unstetigförderer zum Befördern von Luftreifen von einer Lagereinheit zu einer Position im Bereich einer Vulkanisationspresse, mit einem Roboterarm und einem an dem Roboterarm gelagerten Greifer. Weiterhin betrifft die Erfindung ein Verfahren zum Befördern von Luftreifen mit einem Unstetigförderer.

Unvulkanisierte Luftreifen werden typischerweise auf Rollregalen zwischengelagert von wo aus sie händisch entnommen werden und im unmittelbaren Umfeld einer Vulkanisationspresse abgelegt werden. Aufgrund des Gewichts und der schlechten Greifbarkeit von Luftreifen ist dies eine körperlich belastende sowie kostenintensive Aufgabe.

Vorrichtungen für eine maschinengestütztes Entnehmen von unvulkanisierten Luftreifen sind aufgrund des relativ hohen Gewichts der Luftreifens in Verbindung mit einer hohen Empfindlichkeit gegenüber Beschädigungen des unvulkanisierten Luftreifens aufwendig. Weiterhin sind derartige Vorrichtungen aufgrund der zu bewegenden Massen schwer und aufgrund von Sicherheitsvorschriften räumlich von Personen zu trennen. Dies ist kostenaufwendig und in bestehenden Reifenwerken nur mit erheblichen Aufwand realisierbar. Ein Ausfall von derartigen Vorrichtungen führt zu einem Produktionsstopp.

Vor diesem Hintergrund liegt der Erfindung die Aufgabe zugrunde, eine Vorrichtung und ein Verfahren derart auszuführen, dass in einfacher und kostengünstiger Form Personen beim Entnehmen von Luftreifen aus Lagereinheiten entlastet werden, wobei die Vorrichtung für ein Nachrüsten mit geringem Aufwand in bestehenden Reifenwerken geeignet ist.

Diese Aufgabe wird gelöst mit einem Unstetigförderer gemäß den Merkmalen des Patentanspruches 1 und einem Verfahren gemäß dem nebengeordneten Anspruch.

Die Unteransprüche betreffen besonders zweckmäßige Weiterbildungen der Erfindung.

Erfindungsgemäß ist also ein Unstetigförderer zum Befördern von Luftreifen von einer Lagereinheit zu einer Position im Bereich einer Vulkanisationspresse, mit einem Roboterarm und einem an dem Roboterarm gelagerten Greifer vorgesehen. Der Unstetigförderer ist dazu eingerichtet zeitgleich mit Personen im Arbeitsbereich der Personen autonom zu verfahren und bei Annäherung an und beziehungsweise oder Kontakt mit den Personen seine Fördergeschwindigkeit anzupassen.

Die Personen werden vom Entnehmen der Luftreifen aus Lagereinheiten entlastet, wobei der Unstetigförderer sich an die räumlichen Gegebenheiten von bestehenden Reifenwerken anpassen kann.

Unter einer Lagereinheit werden insbesondere Regale mit mehreren neben- und übereinander angeordneten Regalfächern verstanden, wobei Lagereinheiten bevorzugt Rollen aufweisen, um die Luftreifen von einem Beladeort zu einem Entladeort verfahren zu können.

Der Bereich einer Vulkanisationspresse ist ein kleiner Bereich um eine Vulkanisationspresse herum, der bevorzugt einen Radius von kleiner 8 m und weiter wird bevorzugt von kleiner 4 m aufweist, so das kurze Beladewege zur Vulkanisationspresse sichergestellt sind.

Der Unstetigförderer ist dazu eingerichtet zeitgleich mit Personen in deren Arbeitsbereich autonom zu verfahren. Hierunter wird verstanden, dass Personen sich im Arbeitsbereich des Unstetigförderers aufhalten können, während der Unstetigförderer im Betrieb ist, wobei der Unstetigförderer in Abhängigkeit von Personen seine Verfahrgeschwindigkeit anpasst und zumindest in bevorzugten Ausführungsformen stoppt, bis wieder ausreichender Abstand zu Personen besteht. Eine räumliche oder zeitliche Abgrenzung ist nicht gegeben. Eine sichere Arbeitsumgebung wird durch eine Steuerung basierend auf Sensorsignalen von Sensoren des Unstetigförderers oder dessen Umgebung sichergestellt.

Eine Realisierungsmöglichkeit sieht einen kollaborativen Unstetigförderer vor, mit einem autonomen Flurförderfahrzeug wie beispielsweise einem AGV, wobei der AGV einen kollaborativen Roboterarm und einen kollaborativen Greifer aufweist. Alternativ könnte auch ein Industrieroboterarm und Greifer verwendet werden, wobei diese lediglich verfahrbar sind, wenn durch eine Sensorik eine Beabstandung durch Personen sichergestellt wird. Betritt eine Person den Sicherheitsbereich unterbrechen der Industrieroboterarm und der Greifer ihre Bewegungen, bis die Person den Sicherheitsbereich verlassen hat.

Eine bevorzugte Ausführungsform sieht vor, dass der Unstetigförderer ein gleisloses, ein gleisgebundenes oder ein spurgeführtes Fördergerät, insbesondere ein Flurfördergerät ist. Ein gleisgebundenes Fördergerät hat sich als vorteilhaft herausgestellt, da es besonders kompakte Maße aufweisen kann und, insbesondere wenn die Gleise nicht am Boden befestigt sind, einen besonders geringen Platzbedarf am Boden aufweist, beziehungsweise sich besonders selten in dem Arbeitsbereich von Personen befindet. Gleislose Fördergeräte haben sich als einfach in Reifenwerken zu installieren erwiesen. Hierbei haben sich spurgeführte Fördergeräte als kosteneffizient und besonders einfach zu installieren erwiesen. Nicht spurgeführte Fördergeräte haben sich insbesondere in Arbeitsumgebungen, die einem stetigen Wandel unterliegen, als vorteilhaft erwiesen, da diese Hindernisse selbstständig umfahren können.

Eine weitere bevorzugte Ausführungsform sieht vor, dass die Lagereinheit ein Zwischenlager und insbesondere ein Regal ist und bevorzugt verfahrbar gelagert ist. Der Unstetigförderer hat sich insbesondere auf Grund seines an dem Roboterarm gelagerten Greifers als geeignet zum Fördern von Luftreifen aus einem Regal erwiesen. Auch das Greifen und anschließende Fördern von Luftreifen aus verfahrbaren Lagern, die aufgrund ihrer Verfahrbarkeit in ihrer Position eine größere Toleranz aufweisen, ist mit dem Unstetigförderer zuverlässig möglich.

Eine weitere bevorzugte Ausführungsform sieht vor, dass die Position ein weiteres Zwischenlager oder ein Greifer oder eine Vulkanisationspresse ist. Der Unstetigförderer ist aufgrund seines Aufbaus mit dem Roboterarm und dem an dem Roboterarm gelagerten Greifer geeignet den Luftreifen mit einer hohen Genauigkeit zu fördern. Weiterhin wird, insbesondere durch den Greifer, eine Übergabe des Luftreifens an Positionen ermöglicht, die anspruchsvoll hinsichtlich einer automatisierten Übergabe sind. Der Unstetigförderer kann Luftreifen nicht nur an ein weiteres Zwischenlager, sondern auch an einen weiteren Greifer, der typischerweise zum Beladen der Vulkanisationspresse vorgesehen ist, übergeben. Auch ein Beladen der Vulkanisationspresse durch den Unstetigförderer ist möglich.

Eine weitere bevorzugte Ausführungsform sieht vor, dass der Roboterarm und der Greifer mittels Sensoren dazu eingerichtet sind, zeitgleich mit Personen im Arbeitsbereich der Personen autonom zu verfahren. Ein Verfahren des Roboterarms und des Greifers während der Anwesenheit von Personen im aktuellen Arbeitsbereich des Roboterarms und des Greifers erhöht die Effizienz des Unstetigförderers, da dieser auch einer unmittelbaren Anwesenheit von Personen verfahren kann.

Eine weitere bevorzugte Ausführungsform sieht vor, dass der Unstetigförderer dazu eingerichtet ist mit nichttrennenden Sicherheitsvorrichtungen, insbesondere Lichtschranken und beziehungsweise oder Kamerasystemen, zu kommunizieren und eine Verfahrbarkeit des Roboterarms und des Greifers freizugeben, wenn sich der Unstetigförderer im Sicherheitsbereich einer nichttrennenden Sicherheitsvorrichtungen befindet. Durch die Kommunikation des Unstetigförderers mit nichttrennenden Sicherheitsvorrichtungen und einer darauf basierenden Freigabe der Verfahrbarkeit des Roboterarms und des Greifers, wird die Nutzung von durch den Unstetigförderer automatisiert beförderten Industrierobotern ermöglicht. Auf kollaborative Roboterarme und Greifer kann verzichtet werden, wobei Personen sich sicher und ungehindert in allen möglichen Arbeitsbereichen der Industrieroboter bewegen können. Lediglich wenn sich eine Person in dem aktuell genutzten Arbeitsbereich eines Industrieroboters befindet, muss der Industrieroboter gestoppt werden.

Eine weitere bevorzugte Ausführungsform sieht vor, dass der Unstetigförderer Sensoren aufweist zum Detektieren von Störkonturen sowie von Luftreifen, wobei die Sensoren Näherungssensoren, Lidar-Sensoren und beziehungsweise oder ein Kamerasystem, insbesondere ein 3D-Kamerasystem sind. Es hat sich als vorteilhaft erwiesen, dass der Unstetigförderer mit Sensoren Störkonturen sowie Luftreifen erfassen kann, wobei sich insbesondere Näherungssensoren, Lidar-Sensoren und beziehungsweise oder Kamerasysteme als vorteilhaft erwiesen haben, da mit diesen Sensoren in einfacher und zuverlässiger Weise sowohl Störkonturen als auch Luftreifen erkannt werden können.

Eine weitere bevorzugte Ausführungsform sieht vor, dass der Roboterarm geeignet ist Lasten von zumindest 20 kg, bevorzug zumindest 30 kg und weiter bevorzugt zumindest 40 kg zu befördern. Luftreifen, auch für Personenkraftwagen, wachsen in ihren Dimensionen sowie in ihrem Gewicht, sodass es vorteilhaft ist, wenn der Roboterarm geeignet ist zumindest 20 kg, bevorzugt jedoch 30 kg oder 40 kg zu befördern.

Eine weitere bevorzugte Ausführungsform sieht vor, dass der Roboterarm einen Barcodescanner und den Greifer aufweist, wobei der Greifer dazu eingerichtet ist die Luftreifen an ihrer Reifenumfangsfläche zu greifen und bevorzugt in zwei voneinander unabhängige Drehrichtungen um einen Winkel von zumindest 180 Grad zu drehen, wobei eine Drehrichtung einer Betriebsdrehrichtung des Luftreifens entspricht. Durch den Greifer, der Luftreifen in ihrer Betriebsdrehrichtung, also entlang ihrer Reifenumfangsfläche, drehen kann, wird es ermöglicht mit einem an dem Roboterarm angebrachten Barcodescanner einen an dem Luftreifen angebrachten Barcode auszulesen. Die Ausrichtung oder Positionierung des Barcodes an dem Luftreifen beim Greifen des Luftreifens ist hierbei variabel. Das Rotieren des Reifens durch den Greifer senkrecht zu seiner Reifenumfangsfläche ermöglicht es eine im Zwischenlager nach unten orientierte Reifenseitenfläche nach oben orientiert abzulegen.

Erfindungsgemäß ist ein Verfahren zum Befördern von Luftreifen mit einem Unstetigförderer, insbesondere einem erfindungsgemäßen Unstetigförderer vorgesehen, mit den Schritten:
a) Bereitstellen von Lagereinheiten zum Lagern von Luftreifen;
b) Bereitstellen von Vulkanisationspressen;
c) Bereitstellen eines autonomen Unstetigförderers mit einem Roboterarm und einem an dem Roboterarm gelagerten Greifer, wobei der Unstetigförderer dazu eingerichtet ist zeitgleich mit Personen im Arbeitsbereich der Personen autonom zu verfahren und bei Annäherung an und beziehungsweise oder Kontakt mit den Personen seine Fördergeschwindigkeit anzupassen;
d) Senden eines Auftrags-Signals an den Unstetigförderer;
e) Autonomes Verfahren des Unstetigförderer zu einer Lagereinheit unter Berücksichtigung von Störkonturen;
f) Autonomes Verfahren des Roboterarms und des Greifers zur Entnahme eines Luftreifens aus der Lagereinheit unter Berücksichtigung von Störkonturen;
g) Autonomes Verfahren des Unstetigförderers zu einer Position im Bereich einer Vulkanisationspresse unter Berücksichtigung von Störkonturen;
h) Autonomes Verfahren des Roboterarms und des Greifers zur Abgabe des Luftreifens an die Position im Bereich der Vulkanisationspresse unter

Berücksichtigung von Störkonturen.

Die Personen werden vom Entnehmen der Luftreifen aus Lagereinheiten entlastet, wobei der Unstetigförderer sich an die räumlichen Gegebenheiten von bestehenden Reifenwerken anpassen kann.

Eine bevorzugte Ausführungsform sieht vor, dass bei Schritt f) mit Sensoren das Vorhandensein eines Luftreifens an einem Lagerplatz erkannt wird. Hierdurch wird sichergestellt, dass sich ein Luftreifen an dem Lagerplatz befindet. Eine nicht voll bestückte Lagereinheit oder eine manuelle Entnahme eines Luftreifens ist für den automatisierten Entnahmeprozess nicht hinderlich.

Eine weitere bevorzugte Ausführungsform sieht vor, dass das Verfahren des Roboterarms und des Greifers folgend auf die Ausgabe eines Freigabesignal durchgeführt wird, wobei das Freigabesignal basierend auf einem Signal von Sensoren ausgegeben wird, die sich an dem Unstetigförderer befinden und bevorzugt ein Näherungssensor und beziehungsweise oder ein Kraftsensor sind, oder die sich in der Umgebung des Unstetigförderers befinden und bevorzugt Lichtschranken, Laserscanner, Lidar-Sensoren und beziehungsweise oder Kamerasysteme sind, wobei das Verfahren des Roboterarms und des Greifers verändert wird, wenn das Freigabesignal nicht mehr ausgegeben wird. Ein derartiges Verfahren ermöglicht die Verwendung eines Industrieroboters als Roboterarm und als Greifer. Auf kollaborative Roboterarme und Greifer kann verzichtet werden, wobei Personen sich sicher und ungehindert in allen möglichen Arbeitsbereichen der Industrieroboter bewegen können. Lediglich wenn sich eine Person in dem aktuell genutzten Arbeitsbereich eines Industrieroboters befindet, muss der Industrieroboter gestoppt werden.

Eine weitere bevorzugte Ausführungsform sieht vor, dass der Unstetigförderer durch Vergleichen der vorliegenden Geometrie des Luftreifens und beziehungsweise oder Masse des Luftreifens und beziehungsweise oder durch Vergleichen von einem sich an dem Luftreifen befindenden Barcodes entnommenen Daten mit Daten aus dem Auftrags-Signal eine Plausibilitätskontrolle und beziehungsweise oder einen Datenabgleich durchführt zum Prüfen, dass ein dem Auftrags-Signal entsprechender Luftreifen befördert wird. Die Plausibilitätskontrolle beziehungsweise der Datenabgleich verringerte die Gefahr einen nicht dem Auftrags-Signal entsprechenden Luftreifen zu fördern.

Die Erfindung lässt zahlreiche Ausführungsformen zu. Zur weiteren Verdeutlichung ihres Grundprinzips sind zwei davon in den Zeichnungen dargestellt und werden nachfolgend beschrieben. Diese zeigen in
Fig. 1 einen Unstetigförderer mit einem an einen Roboterarm gelagerten Greifer auf einem fahrerlosen Flurförderfahrzeug zum Befördern von Luftreifen;
Fig. 2 einen Unstetigförderer mit einem an einen Roboterarm gelagerten Greifer an einem fahrerlosen Schienenfahrzeug.

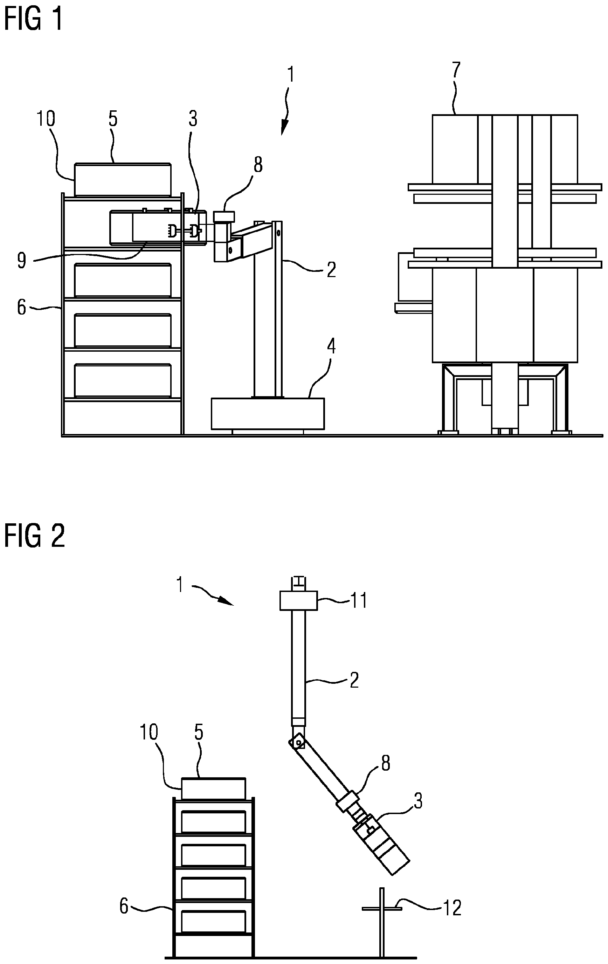

Figur 1 zeigt einen Unstetigförderer 1 mit einem an einen Roboterarm 2 gelagerten Greifer 3 auf einem fahrerlosen Flurförderfahrzeug 4 zum Befördern von Luftreifen 5. Der Unstetigförderer 1 ist zum Befördern von Luftreifen 5 von einer Lagereinheit 6 zu einer Position in einem Bereich einer Vulkanisationspresse 7 vorgesehen.

Der Unstetigförderer 1 ist mittels Sensoren 8, die als eine 3-D Kamera, als Lidar-Sensoren und als Näherungssensoren ausgebildet sind, dazu eingerichtet zeitgleich mit Personen im Arbeitsbereich der Personen autonom zu verfahren.

Bei einer Annäherung an und bei einer Kontaktaufnahme mit einer Person verringert der Unstetigförderer 1 seine Fördergeschwindigkeit und stoppt eine Förderung, wenn dies aufgrund eines geringen Abstandes oder eines Kontaktes mit einer Person notwendig ist. Unter Stoppen des Förderns wird ein Stoppen einer jeden Bewegung des Unstetigförderers 1 verstanden.

Das Flurförderfahrzeug 4 ist ein fahrerloses Transportfahrzeug, wobei derartige Transportfahrzeuge auch unter den Begriffen AGV und AMR bekannt sind. Oben auf dem Flurförderfahrzeug 4 ist der Roboterarm 2 montiert, der sechs Freiheitsgrade aufweist. Dies ermöglicht dem Roboterarm 2 den Greifer 3 translatorisch vertikal zu verfahren sowie ihn horizontal rotatorische und translatorisch zu verfahren. Weiterhin kann der Roboterarm 2 den Greifer 3 um 180° rotieren, so dass die Oberseite eines gegriffenen Luftreifens 5 anschließend nach unten weist.

Der Greifer 3 weist zwei Antriebseinheiten auf, die ein Zusammenfahren und Auseinanderfahren der beiden Greifarme 9 des Greifers 3 ermöglichen sowie ein Rotieren eines gegriffenen Luftreifens 5 entlang seiner Reifenumfangsfläche 10.

Erhält der Unstetigförderer 1 einen Auftrag zum Fördern eines Luftreifens 5, verfährt das Flurförderfahrzeug 4 zu der Lagereinheit 6 und verfährt dort angekommen mit dem Roboterarm 2 den Greifer 3 zum Lagerplatz des Luftreifens 5. Der Greifer 3 wird um den Luftreifen 5 herum positioniert, indem er in radialer Richtung des Luftreifens 5 zum Luftreifen 5 verfahren wird. Anschließend werden die Greifarme 9 des Greifers 3 aufeinander zu verfahren zum Greifen des Luftreifens 5. Mittels eines Kraftsensors wird eine ausreichende Greifkraft sichergestellt. Der Greifer 3 wird aus der Lagereinheit 6 verfahren, anschließend wird der Luftreifen 5 um 180° gedreht, so dass die vorherige obere Seite des Luftreifens 5 folgend nach unten weist. Folgend wird der Luftreifen 5 entlang seiner Reifenumfangsfläche 10 rotiert, bis ein Barcode ausgelesen werden kann. Das Flurförderfahrzeug 4 verfährt zur Vulkanisationspresse 7 und positioniert den Luftreifen 5 in der Vulkanisationspresse 7.

In der Figur 2 ist ein Unstetigförderer 1 mit einem an einen Roboterarm 2 gelagerten Greifer 3 an einem fahrerlosen Schienenfahrzeug 11 dargestellt. Der Unstetigförderer 1 weist die gleichen Sensoren 8 auf wie der Unstetigförderer 1 der ersten Ausführungsform und kann ebenfalls in gleicher Weise zeitgleich mit Personen im Arbeitsbereich der Personen autonom verfahren.

Das Schienenfahrzeug 11 ist ein fahrerlose Schienenfahrzeug, wobei die Schienen in dieser Ausführungsform an einer Hallendecke vorgesehen sind. An dem Schienenfahrzeug 11 ist der aus der ersten Ausführungsform bekannte Roboterarm 2 sowie der Greifer 3 montiert.

Der Greifer 3 entnimmt, nach Erhalt eines Auftrags zum Fördern eines Luftreifens 5, der Lagereinheit 6 einen Luftreifen 5, in dem das Schienenfahrzeug 11 den Roboterarm 2 zur Lagereinheit 6 verfährt, wo der Roboterarm 2 den Greifer 3 um den Luftreifen 5 verfährt. Der Greifer 3 gereift den Luftreifen 5, der Roboterarm 2 verfährt den Greifer 3, woraufhin der Luftreifen 5 in der ersten Ausführungsform beschrieben den Luftreifen 5 um 180° dreht und anschließend um eine weitere Achse rotiert. Das Schienenfahrzeug 11 verfährt den Roboterarm 2 zu einem weiteren Zwischenlager 12, das ein Green tire stand ist, im Bereich der Vulkanisationspresse 7 und positioniert den Luftreifen 5 auf dem weiteren Zwischenlager 12.

### Bezugszeichenliste

- 1: Unstetigförderer
- 2: Roboterarm
- 3: Greifer
- 4: Flurförderfahrzeug
- 5: Luftreifen

- 6: Lagereinheit
- 7: Vulkanisationspresse
- 8: Sensoren
- 9: Greifarme
- 10: Reifenumfangsfläche

- 11: Schienenfahrzeug
- 12: weitere Zwischenlager

## Patentansprüche

1. Unstetigförderer (1) zum Befördern von Luftreifen (5) von einer Lagereinheit (6) zu einer Position im Bereich einer Vulkanisationspresse (7), mit einem Roboterarm (2) und einem an dem Roboterarm (2) gelagerten Greifer (3), **dadurch gekennzeichnet, dass** der Unstetigförderer (1) dazu eingerichtet ist zeitgleich mit Personen im Arbeitsbereich der Personen autonom zu verfahren und bei Annäherung an und/oder Kontakt mit den Personen seine Fördergeschwindigkeit anzupassen.

2. Unstetigförderer (1) nach Anspruch 1, **dadurch gekennzeichnet, dass** der Unstetigförderer (1) ein gleisloses, ein gleisgebundenes oder ein spurgeführtes Fördergerät, insbesondere ein Flurförderfahrzeug (4) ist.

3. Unstetigförderer (1) nach den Ansprüchen 1 oder 2, **dadurch gekennzeichnet, dass** die Lagereinheit (6) ein Zwischenlager und insbesondere ein Regal ist und bevorzugt verfahrbar gelagert ist.

4. Unstetigförderer (1) nach einem der vorangehenden Ansprüche, **dadurch gekennzeichnet, dass** die Position ein weiteres Zwischenlager oder ein Greifer (3) oder eine Vulkanisationspresse (7) ist.

5. Unstetigförderer (1) nach einem der vorangehenden Ansprüche, **dadurch gekennzeichnet, dass** der Roboterarm (2) und der Greifer (3) mittels Sensoren (8) dazu eingerichtet sind zeitgleich mit Personen im Arbeitsbereich der Personen autonom zu verfahren.

6. Unstetigförderer (1) nach einem der vorangehenden Ansprüche, **dadurch gekennzeichnet, dass** der Unstetigförderer (1) dazu eingerichtet ist mit nichttrennenden Sicherheitsvorrichtungen, insbesondere Lichtschranken und/oder Kamerasystemen, zu kommunizieren und eine Verfahrbarkeit des Roboterarms (2) und des Greifers (3) freizugeben, wenn sich der Unstetigförderer (1) im Sicherheitsbereich einer nichttrennenden Sicherheitsvorrichtungen befindet.

7. Unstetigförderer (1) nach einem der vorangehenden Ansprüche, **dadurch gekennzeichnet, dass** der Unstetigförderer (1) Sensoren (8) aufweist zum Detektieren von Störkonturen sowie von Luftreifen (5), wobei die Sensoren (8) Näherungssensoren, Lidar-Sensoren und/oder ein Kamerasystem, insbesondere ein 3D-Kamerasystem sind.

8. Unstetigförderer (1) nach einem der vorangehenden Ansprüche, **dadurch gekennzeichnet, dass** der Roboterarm (2) geeignet ist Lasten von zumindest 20 kg, bevorzug zumindest 30 kg und weiter bevorzugt zumindest 40 kg zu befördern.

9. Unstetigförderer (1) nach einem der vorangehenden Ansprüche, **dadurch gekennzeichnet, dass** der Roboterarm (2) einen Barcodescanner und den Greifer (3) aufweist, wobei der Greifer (3) dazu eingerichtet ist die Luftreifen (5) an ihrer Reifenumfangsfläche (10) zu greifen und bevorzugt in zwei voneinander unabhängige Drehrichtungen um einen Winkel von zumindest 180 Grad zu drehen, wobei eine Drehrichtung einer Betriebsdrehrichtung des Luftreifens (5) entspricht.

10. Verfahren zum Befördern von Luftreifen (5) mit einem Unstetigförderer (1), insbesondere einem Unstetigförderer (1) nach einem der vorangehenden Ansprüche, mit den Schritten:
a) Bereitstellen von Lagereinheiten (6) zum Lagern von Luftreifen (5);
b) Bereitstellen von Vulkanisationspressen (7);
c) Bereitstellen eines autonomen Unstetigförderers (1) mit einem Roboterarm (2) und einem an dem Roboterarm (2) gelagerten Greifer (3), wobei der Unstetigförderer (1) dazu eingerichtet ist zeitgleich mit Personen im Arbeitsbereich der Personen autonom zu verfahren und bei Annäherung an und/oder Kontakt mit den Personen seine Fördergeschwindigkeit anzupassen;
d) Senden eines Auftrags-Signals an den Unstetigförderer (1);
e) Autonomes Verfahren des Unstetigförderer (1) zu einer Lagereinheit (6) unter Berücksichtigung von Störkonturen;
f) Autonomes Verfahren des Roboterarms (2) und des Greifers (3) zur Entnahme eines Luftreifens (5) aus der Lagereinheit (6) unter Berücksichtigung von Störkonturen;
g) Autonomes Verfahren des Unstetigförderers (1) zu einer Position im Bereich einer Vulkanisationspresse (7) unter Berücksichtigung von Störkonturen;
h) Autonomes Verfahren des Roboterarms (2) und des Greifers (3) zur Abgabe des Luftreifens (5) an die Position im Bereich der Vulkanisationspresse (7) unter Berücksichtigung von Störkonturen.

11. Verfahren nach den Ansprüchen 10, **dadurch gekennzeichnet, dass** bei Schritt f) mit Sensoren (8) das Vorhandensein eines Luftreifens (5) an einem Lagerplatz erkannt wird.

12. Verfahren nach den Ansprüchen 10 oder 11, **dadurch gekennzeichnet, dass** das Verfahren des Roboterarms (2) und des Greifers (3) folgend auf die Ausgabe eines Freigabesignal durchgeführt wird, wobei das Freigabesignal basierend auf einem Signal von Sensoren (8) ausgegeben wird, die sich an dem Unstetigförderer (1) befinden und bevorzugt ein Näherungssensor und/oder ein Kraftsensor sind, oder die sich in der Umgebung des Unstetigförderers (1) befinden und bevorzugt Lichtschranken, Laserscanner, Lidar-Sensoren und/oder Kamerasysteme sind, wobei das Verfahren des Roboterarms (2) und des Greifers (3) verändert wird, wenn das Freigabesignal nicht mehr ausgegeben wird.

13. Verfahren nach einem der Ansprüche 10 bis 12, **dadurch gekennzeichnet, dass** der der Unstetigförderer (1) durch Vergleichen der vorliegenden Geometrie des Luftreifens (5) und beziehungsweise oder Masse des Luftreifens (5) und beziehungsweise oder durch Vergleichen von einem sich an dem Luftreifen (5) befindenden Barcodes entnommenen Daten mit Daten aus dem Auftrags-Signal eine Plausibilitätskontrolle und beziehungsweise oder einen Datenabgleich durchführt zum Prüfen, dass ein dem Auftrags-Signal entsprechender Luftreifen (5) befördert wird.
